# EUROPÄISCHE PATENTANMELDUNG

(11) **EP 1 959 547 A2**
(43) Veröffentlichungstag der Anmeldung: **20.08.2008**
(21) Anmeldenummer: 08007684.7
(22) Anmeldetag: 21.04.2008
(51) Int. Cl.: H02K 53/00

(54) **Stromerzeugungsanlage**

(71) Anmelder: Kist, Eberhard, 77855 Achern (DE)
(72) Erfinder: Kist, Eberhard, 77855 Achern (DE)
(74) Vertreter: Ege, Guido

(57) **Zusammenfassung**

Die Erfindung betrifft eine Stromerzeugungsanlage bestehend aus einer Antriebsgruppe, einer Generatorgruppe und einer dazwischen geschalteten Hydraulikeinheit.

## Beschreibung

Die Erfindung betrifft eine Stromerzeugungsanlage mit zumindest einer Antriebseinheit und zumindest einem von dieser angetriebenen Generator.

Derartige als Stromgeneratoren bekannte Stromerzeugungsanlagen sind bekannt. Hierzu wird beispielsweise eine Brennkraftmaschine mit einem Stromgenerator mechanisch verbunden. Dabei treibt die Kurbelwelle der Brennkraftmaschine den Generator an, so dass dieser elektrischen Strom erzeugt. Der Antrieb durch die Brennkraftmaschine kann dabei weder verzweigt noch über weitere Distanzen hergestellt werden.

Aufgabe der Erfindung ist daher eine Stromerzeugungsanlage in vorteilhafter Weise weiterzubilden.

Die Aufgabe wird durch eine Stromerzeugungsanlage mit zumindest einer zumindest einen Generator antreibenden Antriebseinheit gelöst, wobei in einen Drehmomentfluss zwischen einer Antriebswelle der zumindest einen Antriebseinheit und einer Generatorwelle des zumindest einen Generators eine Hydraulikeinheit bestehend aus zumindest einer hydraulischen Baueinheit geschaltet ist. Eine derartige Stromerzeugungsanlage bietet den Vorteil, dass mittels der Hydraulikeinheit eine Drehmomentübertragung von der Antriebseinheit auf den Generator möglich ist, die weitgehend unabhängig von einer Anordnung der Antriebseinheit und des Generators zueinander ist. Dabei kann durch eine entsprechende Auswahl von hydraulischen Baueinheiten der Drehmomentfluss über weite Strecken aufrechterhalten, gewandelt und verstärkt werden.

Als Antriebseinheit können ein einzelnes oder mehrere zusammengeschaltete Aggregate, die eine kinetische Energie, vorzugsweise in Form einer auf eine Antriebswelle übertragenen kinetischen Energie übertragen, dienen. Beispielsweise kann eine Antriebseinheit oder eine Kombination von Antriebseinheiten, die Windenergie, Wasserkraft, fossile oder künstliche Brennstoffe, nukleare Energie, elektrische Energie und/oder andere Energieformen als Energieträger umsetzt, vorgesehen sein.

Besonders vorteilhaft ist ein Ausführungsbeispiel mit einer Antriebseinheit mit zumindest einem Elektromotor, wobei zumindest ein Teil der von dem zumindest einen Generator erzeugten Energie zum Betrieb des Elektromotors eingesetzt wird. Dabei handelt es sich um eine Rückführung der vom Generator erzeugten Energie auf den Elektromotor. Es versteht sich, dass eine derartige Rückführung insbesondere bei einem schlechten Wirkungsgrad der Hydraulikeinheit einen Energieverlust bedeuten kann. Es kann jedoch vorteilhaft sein, die Hydraulikeinheit im Dauerbetrieb zu betreiben und/oder mittels der Hydraulikeinheit andere Energieverbraucher mit kinetischer Energie zu versorgen, wobei hierzu eine hydraulische Baueinheit wie beispielsweise ein hydraulischer Motor mit einer Antriebswelle kinetische Energie auf den Energieverbraucher abgibt. Dieser Energieverbraucher kann beispielsweise die von der zumindest einen Antriebseinheit wie Elektromotor erzeugte Energie zu einem großen Teil variabel abnehmen, so dass überschüssige Energie jeweils an einen Generator abgegeben wird, der anschließend die beispielsweise unter konstanten Betriebsbedingungen wie konstanter Last des Elektromotors erzeugte überschüssige Energie der Stromversorgungsanlage wieder in den Elektromotor rückspeist. Dabei ist die Höhe der eingespeisten Energie unter anderem eine Funktion des Wirkungsgrads der Hydraulikeinheit.

Die Hydraulikeinheit ist zumindest aus einer hydraulischen Baueinheit gebildet. Derartige hydraulische Baueinheiten können beispielsweise eine oder mehrere hydraulische Pumpen, Verstärkereinheiten und/oder hydraulische Motoren sein. Die hydraulische(n) Pumpe(n) können von der zumindest einen Antriebseinheit angetrieben werden und bilden beispielsweise eine Eingangskomponente der Hydraulikeinheit. Der zumindest eine Generator und/oder der zumindest eine Energieverbraucher werden durch einen oder mehrere hydraulische Motoren angetrieben, die von der zumindest einen Pumpe angetrieben werden. Zwischen der zumindest einen Pumpe und dem zumindest einen Hydraulikmotor können Verstärkereinheiten angeordnet sein.

Die hydraulischen Baueinheiten können in vorteilhafter Weise sogenannte Umlaufverdrängermaschinen sein. Derartige Umlaufverdrängermaschinen weisen in vorteilhafter Weise in einem Gehäuse abgedichtete Förderzahnräder auf, die gegenüber einer Welle gelagert sind. Diese Förderzahnräder können abhängig von ihrem Lagerdurchmesser auch als Förderzahnringe ausgestaltet sein. In einem vorteilhaften Ausgestaltungsbeispiel kämmen zwei Förderzahnräder miteinander und werden von jeweils einem Zufuhrkanal beaufschlagt, die an der Ausgangsseite der Umlaufverdrängermaschine zu einem Ablaufkanal vereinigt werden. Im Falle eines hydraulischen Motors ist eine Abtriebswelle mit einem der Förderzahnräder vorzugsweise an der der Druckseite entgegengesetzten Seite des Förderzahnrads verzahnt. Die Pumpe weist anstatt der Abtriebswelle eine Antriebswelle auf. Zwischen Förderzahnrad und An- beziehungsweise Abtriebswelle ist eine Übersetzung ins Schnelle zumindest mit 3:1 eingestellt.

Nachfolgend sind Ausführungsbeispiele der Erfindung anhand der Zeichnung näher erläutert. Es zeigen:
Figur 1 ein Blockschaltbild einer einfachen Stromerzeugungsanlange,
Figur 2 eine Stromerzeugungsanlage mit Stromrückführung.

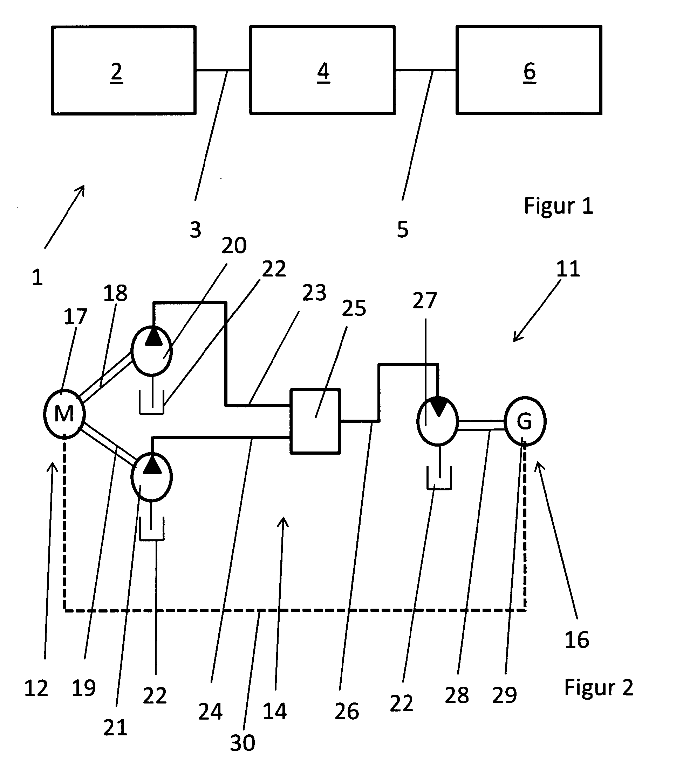

Figur 1 zeigt in schematischer Blockdarstellung eine Stromversorgungsanlage 1 mit einer Antriebseinheit 2, einer Hydraulikeinheit 4 und einem Generator 6. Zwischen der Antriebseinheit 2 und Hydraulikeinheit 4 sowie der Hydraulikeinheit 4 und dem Generator 6 sind eine Antriebswelle 3 und eine Antriebsverbindung 5 vorgesehen, die jeweils eine mechanische Kraftübertragung auf die beziehungsweise von der Hydraulikeinheit 4, beispielsweise in Form eines Drehmoments, gewährleisten. Innerhalb der Hydraulikeinheit erfolgt die Kraftübertragung über ein hydraulisches Fluid, beispielsweise Hydrauliköl.

Die Antriebseinheit 2 kann ein Energiewandler sein, der eine beliebige Energieform, beispielsweise Windenergie, Wasserkraft oder elektrische Energie in kinetische Bewegungsenergie wandelt, die mittels der Antriebswelle 3 auf die Hydraulikeinheit 4 übertragen wird. Dabei können mehrere Energiekonversionsaggregate auch mit einer Nutzung unterschiedlicher Energieformen, zu einer Antriebseinheit zusammengefasst werden, beispielsweise Wärme/Kraftkopplungen, Windräder, mittels Wind- und Sonnenenergie hergestelltem Strom gespeiste Elektromotoren und dergleichen.

Die Hydraulikeinheit 4 erfüllt im einfachsten Fall die Funktion einer Überbrückungsstrecke zwischen der Antriebseinheit 2 und dem Generator 6, wenn beispielsweise eine längere Strecke mit komplizierter Leitungsführung zu überbrücken ist. Weiterhin kann die aus mehreren hydraulischen Baueinheiten wie Pumpen, Motoren und/oder Verstärkern gebildete Hydraulikeinheit 4 neben dem Antrieb des Generators 6 weitere Nebenaggregate mechanisch mittels hydraulischer Motoren antreiben. Der Druck kann innerhalb der Hydraulikeinheit 4 an gewünschter Stelle beispielsweise mittels hydraulischen Verstärkern erhöht werden. Mittels entsprechend im Hydraulikkreis der Hydraulikeinheit angeordneter Pumpen können weitere mechanische Antriebseinheiten seriell zur Antriebseinheit 2 Energie einspeisen. Alternativ oder zusätzlich können hydraulische Motoren vorgesehen sein, die seriell oder parallel zu dem Generator 6 weitere Generatoren antreiben.

Der Generator 6 wird von der Hydraulikeinheit 4 über die Antriebsverbindung 5 vorzugsweise mechanisch mittels der Übertragung eines Drehmoments angetrieben. Bei dem Generator 6 handelt es sich bevorzugt um einen Stromgenerator. Im weiteren Sinne kann der Generator auch als eine Energiekonversionsmaschine verstanden werden, die die mechanische, das heißt, kinetische Energie in eine andere Energieform wandelt. Beispielsweise kann der Generator 6 eine Wasserpumpe sein, die in einem Pumpspeicherkraftwerk eingesetzt wird und damit die kinetische Energie in potentielle Energie wandelt.

Figur 2 zeigt ein Ausführungsbeispiel einer Stromerzeugungsanlage 12 entsprechend der Stromerzeugungsanlage 1 der Figur 1 in Form eines hydraulischen Schaltbilds. Die Antriebseinheit 12 ist als Elektromotor 17 ausgebildet, der von einer externen Energiequelle zumindest teilweise gespeist werden kann. Der Elektromotor 17 treibt über die Antriebswellen 18, 19 die zu der Hydraulikeinheit 14 gehörigen hydraulischen Pumpen 20, 21 an. Die Pumpen 20,21 können auch als Tandempumpe ausgebildet sein, so dass auch die Antriebswellen 18, 19 zu einer Antriebswelle zusammenfallen können. Die Pumpen 20, 21 saugen aus dem im Wesentlichen drucklosen Sumpf 22 hydraulisches Fluid wie Hydrauliköl an und bringen das verdichtete Fluid jeweils in die hydraulischen Leitungen 23, 24 ein, die jeweils einen Eingang am hydraulischen Verstärker 25 bilden. Der hydraulische Verstärker 25 verstärkt die beiden an den hydraulischen Leitungen 23, 24 anliegenden Volumenströme und speist einen gemeinsamen Fluidstrom in die hydraulische Leitung 26 ein. Dabei kann abhängig von den Verhältnissen der Leitungsquerschnitte der Zu- und Ableitungen eine Druckerhöhung und/oder eine Volumenstromerhöhung eingestellt werden. Der hydraulische Verstärker kann beispielsweise aus einer Umlaufverdrängermaschine gebildet sein, die zwei Eingänge aufweist, die jeweils auf ein mit einem kleineren Zahnrad kämmenden Förderzahnrad gerichtet sind, wobei die Förderzahnräder miteinander kämmen und die beiden von den Leitungen 23, 24 zugeführten Hydraulikfluidströme entlang des

Umfangs der Förderzahnräder geführt und anschließend zusammengeführt und in der hydraulischen Leitung 26 abgeführt werden. Weiterhin kann der hydraulische Verstärker 25 mittels eines mit einem der Förderzahnräder verzahnten Antriebszahnrad angetrieben werden. Die hydraulische Leitung 26 bildet den Eingang an dem hydraulischen Motor 27, der mittels der Antriebsverbindung 28 den Generator 16, der vorzugsweise als Stromgenerator 29 ausgebildet ist. Der Ausgang des hydraulischen Motors 27 erfolgt im Wesentlichen drucklos in den Sumpf 22.

Der Stromgenerator 29 und der Elektromotor 17 sind mittels einer elektrischen Leitung 30 verbunden, so dass zumindest ein Teil der elektrisch von dem Stromgenerator 29 erzeugten elektrischen Energie wieder in den Elektromotor 17 einspeisbar ist. Mittels dieser eingespeisten elektrischen Energie kann der Elektromotor 17 zumindest teilweise betrieben werden, insbesondere dann, wenn in der Hydraulikeinheit 14 keine weiteren Verbraucher angeschlossen sind, wobei die auf den Elektromotor 17 über die elektrische Leitung 30 übertragbare Energie vom Wirkungsgrad der Hydraulikeinheit 14 abhängt. Wirkungsgradsteigernd können dabei der hydraulische Verstärker 25 und gegebenenfalls der Hydraulikeinheit 14 zugeordnete - nicht dargestellte - Nebenaggregate sein.

### Bezugszeichenliste

- 1: Stromerzeugungsanlage
- 2: Antriebseinheit
- 3: Antriebswelle
- 4: Hydraulikeinheit
- 5: Antriebsverbindung
- 6: Generator
- 11: Stromerzeugungsanlage
- 12: Antriebseinheit
- 14: Hydraulikeinheit
- 16: Generator
- 17: Elektromotor
- 18: Antriebswelle
- 19: Antriebswelle
- 20: Pumpe
- 21: Pumpe
- 22: Sumpf
- 23: Hydraulische Leitung
- 24: Hydraulische Leitung
- 25: Hydraulischer Verstärker
- 26: Hydraulische Leitung
- 27: Hydraulischer Motor
- 28: Antriebsverbindung
- 29: Stromgenerator
- 30: Elektrische Leitung

## Patentansprüche

1. Stromerzeugungsanlage(1, 11) mit zumindest einer zumindest einen Generator (6, 16) antreibenden Antriebseinheit (2, 12), **dadurch gekennzeichnet, dass** in einen Drehmomentfluss zwischen einer Antriebswelle (3, 18, 19) der zumindest einen Antriebseinheit (2, 12) und einer Antriebsverbindung (5, 28) des zumindest einen Generators (6, 16) eine Hydraulikeinheit (4, 14) bestehend aus zumindest einer hydraulischen Baueinheit geschaltet ist.

2. Stromerzeugungsanlage(1, 11) nach Anspruch 1, **dadurch gekennzeichnet, dass** zumindest eine Antriebseinheit (12) ein Elektromotor (17) ist und zumindest ein Teil des von dem zumindest einen Generator (16) erzeugten Energie zum Betrieb des Elektromotors (17) eingesetzt wird.

3. Stromerzeugungsanlage(11) nach einem der Ansprüche 1 oder 2, **dadurch gekennzeichnet, dass** eine hydraulische Baueinheit ein hydraulischer Verstärker (25)ist.

4. Stromerzeugungsanlage (11) nach einem der Ansprüche 1 bis 3, **dadurch gekennzeichnet, dass** eine hydraulische Baueinheit eine hydraulische Pumpe (20, 21) ist.

5. Stromerzeugungsanlage(11)nach einem der Ansprüche 1 bis 4, **dadurch gekennzeichnet, dass** eine hydraulische Baueinheit ein hydraulischer Motor (27) ist.

6. Stromerzeugungsanlage (11) nach einem der Ansprüche 3 bis 5, **dadurch gekennzeichnet, dass** die Hydraulikeinheit (14) aus zumindest einer von einer Antriebseinheit (12) angetriebenen Pumpe (20, 21), einem dieser nachgeschalteten Verstärker (25) und einem dieser nachgeschalteten hydraulischen, einen Generator antreibenden Motor (27) gebildet ist.

7. Stromerzeugungsanlage nach einem der Ansprüche 1 bis 6, **dadurch gekennzeichnet, dass** die Hydraulikeinheit mittels einer hydraulischen Baueinheit neben dem zumindest einen Generator zumindest einen weiteren Energieverbraucher mit kinetischer Energie versorgt.

8. Stromerzeugungsanlage nach einem der Ansprüche 1 bis 7, **dadurch gekennzeichnet, dass** zumindest eine hydraulische Baueinheit der Hydraulikeinheit eine Umlaufverdrängermaschine ist.

9. Stromerzeugungsanlage nach Anspruch 8, **dadurch gekennzeichnet, dass** die Umlaufverdrängermaschine wenigstens zwei Zuführkanäle aufweist, die zwei miteinander kämmende verdrehbar gelagerte Förderzahnräder beaufschlagen, wobei eine Antriebs- oder Abtriebswelle mit einem Förderzahnrad verzahnt ist.

10. Stromerzeugungsanlage nach Anspruch 9, **dadurch gekennzeichnet, dass** eine Übersetzung zwischen Förderzahnrad und An- beziehungsweise Abtriebswelle größer 3:1 ist.
